# EUROPEAN PATENT APPLICATION

(11) **EP 3 296 791 A1**
(43) Date of publication of application: **21.03.2018**
(21) Application number: 16189182.5
(22) Date of filing: 16.09.2016
(51) Int. Cl.: G02B 27/01

(54) **METHOD, APPARATUS AND COMPUTER PROGRAM FOR NEAR EYE DISPLAY**

(71) Applicant: Nokia Technologies Oy, 02610 Espoo (FI)
(72) Inventor: JÄRVENPÄÄ, Toni, 37800 Akaa (FI); ESKOLIN, Jan, 33960 Pirkkala (FI); SALMIMAA, Marja, 33610 Tampere (FI)
(74) Representative: Nokia EPO representatives

(57) **Abstract**

Certain examples of the present invention relate to a method, apparatus and computer program for near eye display. Certain examples provide method 100 comprising: displaying 101 a reference image 301 on a near eye display 201; presenting 102 a transmissivity pattern 302 on a shutter arrangement configured to provide selectively adjustable transparency 202; adjusting 103 the presented transmissivity pattern 302; receiving 104 an input for indicating an alignment 304 of the displayed reference image 301 and the adjusted transmissivity pattern 302'; and responsive to receiving the input, determining a position 305 of the adjusted transmissivity pattern 302'.

## Description

### TECHNOLOGICAL FIELD

Examples of the present disclosure relate to a method, apparatus and computer program for near eye display. Some examples, though without prejudice to the foregoing, relate to a method and a near eye display device for determining a position of a user's eyes.

### BACKGROUND

Near eye display (NED) devices such as for example: head mounted displays, goggles, smart glasses and other devices for providing virtual reality and/or augmented reality display eyewear are known. However NED devices, such as those configured to provide augmented reality, i.e. wherein real world content (either visible through a see-through NED device, or captured and displayed via the NED device) may have suboptimal alignment of the display of virtual objects/images with respect to real world objects/views. Such alignment may be affected by a relative position of the user's eyes with respect to the NED device, e.g. a horizontal/lateral displacement, a vertical displacement, and separation distance of each of the user's eyes with respect to the NED device.

It is useful to provide method/apparatus for determining a position of a user's eye(s) that may enable a determination of a horizontal position, vertical position and separation distance of the user's eye with respect to the near eye display device so as to enable registration of the user's eyes with respect to the device in all three directions x, y and z. Also, it is useful to determine a user's interpupillary distance (IPD). The determination of such measurements may enable appropriate calibration of the NED device for a particular user and for a particular instance of usage (i.e. a current position/orientation of the NED device on the face of a user). Such calibration may enable, for example the display of virtual imagery to be correctly/appropriately aligned with the user's view of a real world scene. For example, in an augmented reality display where it is desired to display a virtual object at a particular position with respect to a real world object such that it is perceived to be associated with the real world object, such calibration may enable the displayed position of the virtual object to be optimally/correctly aligned with respect to the real world object.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to at least some examples of the disclosure there is provided a method comprising causing, at least in part, actions that result in:
displaying a reference image on means configured to provide a near eye display;
presenting a transmissivity pattern on means configured to provide selectively adjustable transparency;
adjusting the transmissivity pattern;
receiving an input for indicating an alignment of the displayed reference image and the adjusted transmissivity pattern; and
responsive to receiving the input, determining a position of the adjusted transmissivity pattern.

According to at least some examples of the disclosure there is provided a chipset or module comprising processing circuitry configured to perform the above method.

According to at least some examples of the disclosure there is provided an apparatus comprising:
means configured to provide a near eye display, wherein the means configured to provide a near eye display is configured display a reference image;
means configured to provide selectively adjustable transparency, wherein the means configured to provide selectively adjustable transparency is configured to present a transmissivity pattern;
means configured to adjust the presented transmissivity pattern;
means configured to receive an input for indicating an alignment of the displayed reference image and the adjusted transmissivity pattern; and means configured to determine, responsive to receiving the input, a position of the adjusted transmissivity pattern.

According to at least some examples of the disclosure there is provided an apparatus comprising means configured to cause the performance of the method above.

According to at least some examples of the disclosure there is provided a device comprising an apparatus as set out above

According to at least some examples of the disclosure there is provided an apparatus comprising:
a near eye display configured to display a reference image;
a selectively adjustable shutter configured to present a transmissivity pattern;
at least one processor; and
at least one memory including computer program code;
the at least one memory and the computer program code configured to, with the at least one processor, cause the apparatus at least to perform
   adjusting the transmissivity pattern;
   receiving an input for indicating an alignment of the displayed reference image and the adjusted transmissivity pattern; and responsive to receiving the input, determining a position of the adjusted transmissivity pattern.

According to at least some examples of the disclosure there is provided a computer program that, when performed by at least one processor, causes the above method to be performed.

According to at least some examples of the disclosure there is provided a non-transitory computer readable medium encoded with instructions that, when performed by at least one processor, causes at least the above method to be performed.

According to at least some examples of the disclosure there are provided examples as claimed in the appended claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
Figure 1 schematically illustrates a method;
Figures 2A and 2B schematically illustrate an apparatus;
Figures 3A to 3C schematically illustrate a process for determining interpupillary distance;
Figure 4 schematically illustrates a further method;
Figure 5 schematically illustrates a yet further method;
Figures 6A and 6B schematically illustrate an apparatus for determining eye relief; and
Figure 7 schematically illustrates a yet further apparatus.

The Figures are not necessarily to scale. Certain features and views of the figures may be shown schematically or exaggerated in scale in the interest of clarity and conciseness. For example, the dimensions of some elements in the figures may be exaggerated relative to other elements to aid explication. Similar reference numerals are used in the Figures to designate similar features. For clarity, all reference numerals are not necessarily displayed in all figures.

### DETAILED DESCRIPTION

The Figures schematically illustrate a method 100 comprising:
displaying 101 a reference image 301 on means configured to provide a near eye display 201;
presenting 102 a transmissivity pattern 302 on means configured to provide selectively adjustable transparency 202;
adjusting 103 the presented transmissivity pattern 302;
receiving 104 an input for indicating an alignment 304 of the displayed reference image 301 and the adjusted transmissivity pattern 302'; and responsive to receiving the input, determining a position 305 of the adjusted transmissivity pattern 302'.

For the purposes of illustration and not limitation, in certain particular examples a near eye display (NED) device 200 comprises a NED 201 and a shutter 202. The NED 201 comprises a micro-display 201 a and an exit pupil expander (EPE) 201 c for generating and outputting a collimated image beam to a user's eyes. The shutter 202 comprises a plurality of shutter elements, e.g. columns/rows/pixels of the shutter, which are individually selectively controllable to be either transparent 302 or opaque 302c to light. The shutter 202 at least partially overlaps with the NED 201, i.e. in particular the out coupling diffraction gratings 201 c'" of the EPE 201 c. The NED 201 is configured to display a fiducial marker/reference target pattern 301 focussed at infinity. The shutter 202 is configured to present a corresponding shutter pattern 302 of transparent shutter elements. The shutter pattern 302 is a pattern whose shape and configuration of transparent shutter elements is configured to match/compliment the fiducial marker/reference target pattern 301 so as to facilitate/enable a user to determine when the displayed fiducial marker/reference target pattern 301 and the matching shutter pattern 302 have been brought into alignment, e.g. following an adjustment 303 of the positioning of the shutter pattern to an adjusted position 302'.

For example the NED's displayed reference target pattern 301 may comprise the display of a single vertical line focussed at infinity, and the matching shutter pattern may comprise a single transparent column 302 with all the shutter's other columns 302c being configured to block/absorb light. The shutter pattern 302 is adjusted by changing its position, i.e. which specific individual shutter column is configured to be transparent, thereby in effect shifting the location of the transparent shutter column within the shutter to a new transparent shutter column location 302'. When a user perceives that the single transparent shutter column 302' is shifted such that it is brought into alignment 304 with the single displayed vertical line 301, the user provides an input for indicating that such an alignment has been reached. Responsive to such a user input, a determination is made as to the position of the shifted transparent shutter column 302', e.g. based on the transparent shutter column's address or location within the shutter 202. This can be used to determine a horizontal/lateral displacement/distance 305 of the shifted transparent column with respect to a reference point, such as a centre of the NED device 200. This can be used to register the NED device 200 with respect to the user's eye position. This process may be repeated for the user's other eye (sequentially or simultaneously with the process for the first eye) to determine a horizontal displacement/distance 306 of the other eye with respect to the NED device 200. Such determined horizontal displacements/distances 305, 306 of the user's eyes can be used to determine the user's interpupillary distance (IPD).

Moreover a similar process could be carried out wherein the displayed fiducial marker/reference target pattern 301 comprises a horizontal line and the shutter pattern 302 comprises a single horizontal shutter row being configured to be transparent with all the rows configured to be in a blocked/absorbed configuration. The position of the horizontal shutter row may be adjusted so as to be brought into alignment with the displayed horizontal line. Such a process may be used to determine a vertical displacement/distance of the user's eye(s) with respect to the NED device 200.

Certain examples of the disclosure may enable/facilitate the determination of a relative positioning of a user's eyes with respect to a NED device, i.e., a horizontal alignment and vertical alignment of the user's eyes with respect to the near eye display device as well as determination of the user's IPD. Such information and measurements may be used in the registration and calibration of the displayed output of the NED device so as to optimise, for a particular user (i.e. based on the user's particular IPD as well as the relative positions of the user's eyes with respect to how the user is presently wearing the NED device), the alignment of the location of displayed images, which could be virtual content in an augmented reality display and/or 3D content.

Furthermore, the registration of the user's eyes with respect to: the near eye display device, the displayed virtual content/imagery, as well as the shutter may enable the use of the shutter as part of the virtual image creation. For example, shutter patterns (i.e. patterns of selectively adjusted transmissivity) aligned with the displayed virtual content may enable the display of opaque or shaded virtual objects e.g. for blocking bright ambient light spots. This might be particularly suitable for certain types of NED technologies, such as exit pupil expander based NED's which can only add light to the environment, thus everything displayed is transparent. The shutter can selectively block ambient/background light and, if duly calibrated in registration with the NED display and its displayed virtual content, could block the ambient light behind desired displayed pixels, making them less transparent, more opaque and/or enhance the perceived contrast of the virtual content contrast. Such a use/application of the shutters may further require active pupil detection to provide optimal calibration/registration (to counter for eye motion/rotation during use).

Without limiting the scope of the claims, an advantage of some examples of the present disclosure may be to provide an improved method and apparatus for determining a user's eye position with respect to a near eye display device.

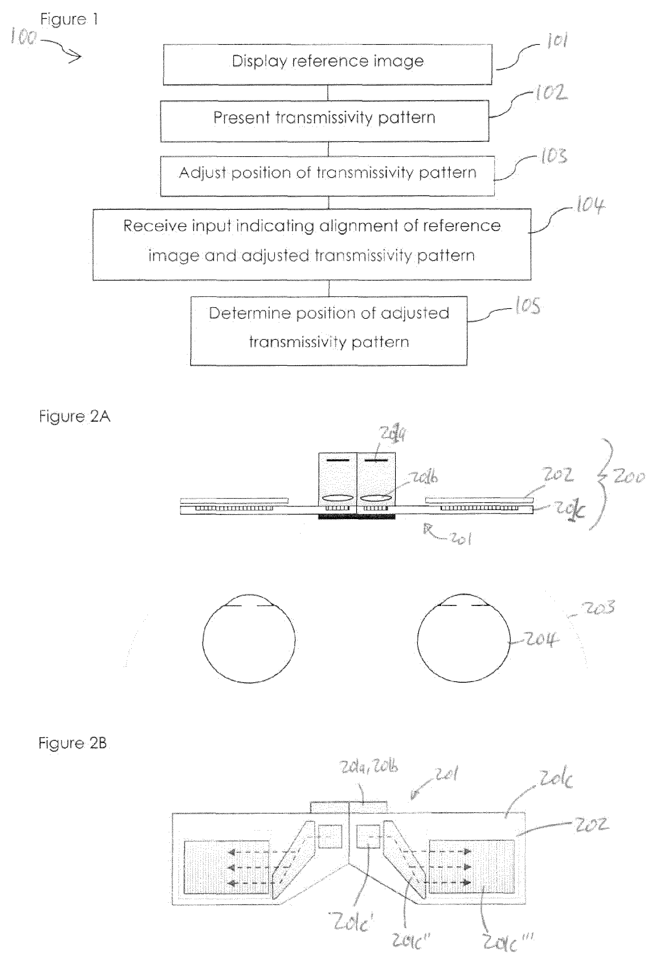

Figure 1 schematically illustrates a flow chart of a method 100 according to an example of the present disclosure. With reference to Figure 1 (as well as Figures 2A
- 3C) in block 100, a reference image 301 is displayed to a user 203 on means configured to provide a near eye display 201. Such means configured to provide a near eye display 201 may be for example:
   a near eye display (NED) 201;
   a micro-display 201 a, an optical engine/assembly 201 b and light guide 201 c (such as an exit pupil expander); and/or
   an optical arrangement able to provide a display of infinitely focused collimated light.

The means configured to provide a near eye display 201 (referred to hereinafter as "NED" 201) may be configured to direct a collimated input image beam to a user's eyes. Moreover, the NED 201 may be configured to display an image substantially focussed at infinity, such that light from such an infinitely focused image from the NED always hits the user's eye at the same angle relative to the NED.

In block 102, a transmissivity pattern 302 is presented to the user 203 on means configured to provide selectively adjustable transparency 202. Such means configured to provide selectively adjustable transparency 202 may, for example, be: a shutter, an arrangement of selectively adjustable shutter elements addressable via columns, rows or individual pixels, adjustable parallax barriers, a layer whose transparency/transmissivity is selectively adjustable (such as a layer comprising a liquid crystal or electro-chromatic material that may be configured to selectively absorb/block or be transparent to light.

The means configured to provide selectively adjustable transparency 202 (referred to hereinafter as "shutter" 202) may be provided adjacent to the NED 201 and overlie the NED on a non-viewing side of the NED, i.e. a side distal from the user. In some examples, the shutter may be provided on the viewing side of the NED.

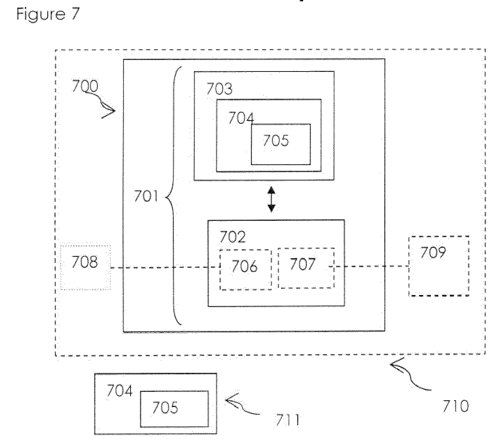

The NED 201 and shutter 202 may be comprised in a NED device 200, under the control of a controller on the NED device (not shown in Figures 2A-3C, though such a controller 701 is shown in Figure 7). The NED device 200 may be a head mounted display (HMD), an exit pupil expander (EPE) based NED and/or a see-through NED.

In some examples, the shutter 202 may be segmentally adjustable, for example, via one or more columns or rows. In some examples, it may be matrix addressable by columns and rows or individual pixels. In some examples, there may be a plurality of addressable pixels, wherein the dimensions of at least a first set of a plurality of pixels differ from the dimension of at least a second set of the plurality of pixels. For example, shutter pixels proximal to a centre shutter (i.e. proximal to a centre of the optical axis of the device) could have dimensions that are smaller than those pixels that are distal/remote of the centre of the shutter 202 and away from the optical axis. The transmissivity pattern 302 that is presented may be configured so as to correspond to and match with the display referenced image 301. In some examples, the displayed reference image 301 is a displayed target pattern whose pattern corresponds to, matches, compliments and/or co-ordinates with the presented transmissivity pattern 302. By providing such complimentary patterns, a user is more readily able to determine when such patterns are perceived to be positionally aligned with one another from the user's perspective (i.e. following the adjustment block of 103 discussed below).

In block 103 the transmissivity pattern 302 is adjusted. In some examples, such adjustment of the transmissivity pattern may comprise adjusting a position of the transmissivity pattern 302 within the shutter 202. For example, adjusting a horizontal and/or a vertical location of the transmissivity pattern 302 within the shutter 202. Such adjustment of the location of the transmissivity pattern 302 may be manually affected, i.e. upon receipt of a user input for effecting each adjustment/movement of the transmissivity pattern, for example, a user may provide an input to shift the transmissivity pattern along one column/row/pixel at a time. Alternatively, the adjustment of the transmissivity pattern may be semi-automated in that the movement of the pattern may occur automatically under the control of a controller and a user need merely provide an input to confirm when the transmissivity pattern 302 and the reference image 301 are aligned, such an input being described in block 104 below.

In block 104, an input is received. The input may be suitable for indicating that the transmissivity pattern has been adjusted such that it has been brought into alignment with the displayed reference image. For example upon a user observing that the transmissivity pattern 302' has been moved such that it has been brought into alignment 304 with the displayed reference image 301, a user may provide an input for indicating the same.

In block 105, responsive to receiving the user input of block 104, a position of the adjusted transmissivity pattern 302' is determined. For example, the position of the adjusted transmissivity pattern within the shutter 202 may be recorded. The position may be determined with respect to one or more of: the NED 201, the shutter 202 and/or some other reference point, for example a central point of the NED device 200. Such a determination of the position of the adjusted transmissivity pattern 302' with respect to the NED device may involve pre-determined knowledge of the relative location of the shutter with respect to the NED device 200. Such determined distances may be used to determine a horizontal position of the user's eye with respect to the NED device, e.g. a horizontal distance 305 between a user's eye 204 and a central point of the NED device 200

By determining distances of a horizontal displacement, such as a horizontal distance 305 between a user's eye 204 and a central point of the NED device 200, and repeating such a measurement for the user's other eye, it is possible to determine a user's interpupillary distance IPD. Additionally or alternatively, a determination can be made as to a vertical displacement of the user's eye or eyes with respect to a reference point of the NED device 200, e.g. by displaying a horizontally aligned reference pattern and adjusting a vertical position of a transparency pattern comprising a horizontal transparent row until their relative positions are brought into visual alignment with one another. Such a vertical positional measurement process could be performed contemporaneously with the horizontal positional measurement process.

Figures 2A and 2B schematically illustrate a block diagram of an apparatus 200 which may be suitable for use with the described method. The apparatus 200 may be a NED device comprising a head mounted display that is wearable by a user 203. Figure 2A shows a cross sectional plan view of the apparatus 200 when worn by a user 203 and Figure 2B shows a schematic front view (i.e. on the viewing side) of the apparatus 200. The apparatus 200 comprises means for generating an input image beam 201 a and 201 b. Such means may comprise a micro-display 201 a and an optical engine/arrangement 201 c for generating collimated light. The apparatus may be configured so as to be able to display images having varying degrees of focus levels and may be configured to be able to display image focused substantially at infinity.

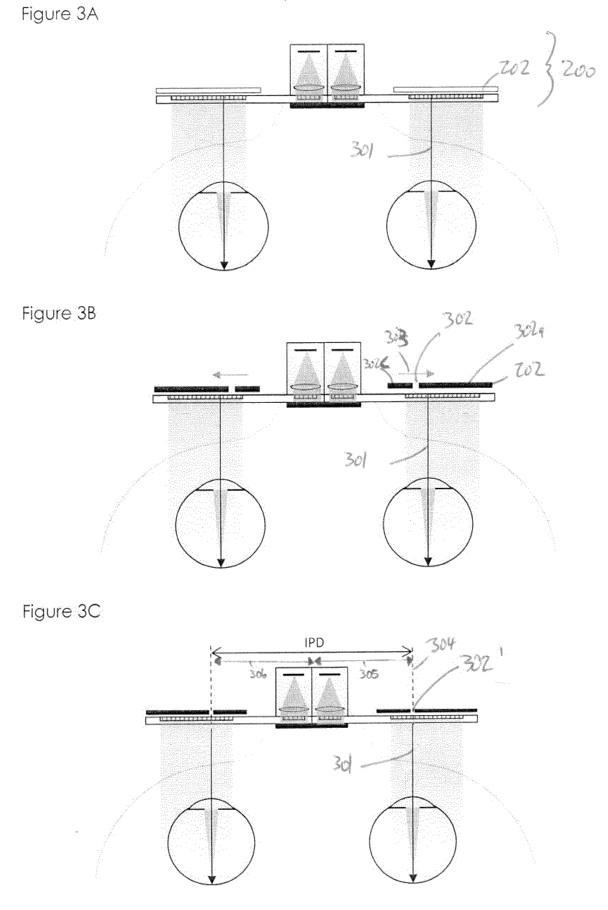

Light from the micro-display 201 a is focused by optics 201 b and in-coupled to the light guide/EPE 201 c via in-coupling diffractive gratings 201 c'. The in-coupled light undergoes total internal reflection within the light guide to intermediate gratings 201 c" to expand the beams in a first direction and light is out-coupled from the light guide 201 c via out-coupling diffractive gratings 201 c'" which expand the beam in a second orthogonal direction. The out-coupled beam, with an expanded exit pupil is directed towards a user's eye 204 as shown in Figure 3A.

In the example apparatus shown, the shutter 202 is provided on an outer/non viewing side of the NED device 200. However, in certain other examples, the shutter may be provided on an inner/viewing side of the NED device 200 such that it is located between the light guide 201 c and the user 203.

Figures 3A to 3C illustrate a process via which the apparatus 200 may be used to determine an IPD of a user 203.

With reference to Figure 3A, firstly a user wears the near eye display device 200 i.e., places the near eye display device 200 on the bridge of the user's nose. It is to be appreciated that the near eye display device may further comprise means for securing/attaching the device to the user's face, for example the provision of arms for going round a user's ear, nose pads and/or other attachment means (not shown). In Figure 3A, the shutter 202 is shown with all its shutter elements configured to be in a transparent mode (as compared to Figure 3B, wherein a shutter pattern is presented, in this case, all the shutter elements configured to be in a light blocking mode except for a single vertical shutter column 302 configured to be in a transparent mode).

The NED device 200 displays a reference image 301. The displayed reference image may be a virtual image. In this particular example, the reference image comprises a vertical line that is centrally displayed in the user's field of view. The NED device 200 may be configured such that the display of the virtual image is effected such that the virtual image is focused at infinity. As the reference image 301 is displayed at infinity and is centrally aligned, the user's eyes, when looking at the vertical line, are parallel and the user observes the vertical line at infinity.

With reference to Figure 3B, the shutter 202 is configured to present a particular transmissivity pattern (hereinafter "shutter pattern"). The shutter pattern 302 may be configured to be complimentary to and match with the target reference pattern 301 of the displayed reference virtual image/target pattern, i.e. the shape and dimensions of the shutter pattern 302 may be configured so as to substantially match the shape and configuration of the target reference pattern 301. In this particular example, the target reference pattern 301 is a vertical line and the corresponding shutter pattern of the shutter 202 is a single transparent shutter column 302 with the remainder of shutter 302c being configured in a black/blocking state.

The position/location of the shutter pattern within the shutter may be adjusted/shifted, as indicated by arrow 303, so as to enable movement of the shutter pattern so as to align the adjusted shutter pattern 302' with the target reference pattern 301 (such alignment 304 being shown in Figure 3C).

The transparent shutter column is shifted (e.g. manually shifted/adjusted upon user input for causing movement of the column, or semi-automatically shifted/adjusted) until the user perceives that the shifted/adjusted transparent shutter column is aligned with the displayed line. Once the user has determined such alignment 304 the user may provide an input for indicating that the adjusted shutter pattern 302' is aligned with the target reference pattern 301. The NED device 200 may be configured so as to enable a user to provide such an input to indicate that the transparent shutter column and the displayed line are aligned via a user input device and/or a user interface of the NED device (not shown).

The transparent shutter column 302 enables the user to see ambient light therethrough, i.e., in effect, the transparent shutter column provides a white column of light when the device is illuminated by an ambient white light. Where there is no natural ambient light a dedicated backlight may be provided so as to provide illumination so that light may pass through the transparent shutter column to be viewed by the user, thereby enabling the user to visually perceive when the (adjusted) transparent shutter column is aligned with the displayed target reference line.

With reference to Figure 3C, once a user observes that the displayed reference line 301 is in alignment 304 with the (adjusted) position of the shutter pattern 302, the user may provide an input signal to the NED device to confirm that alignment has been reached. Responsive to the input, a determination is made as to the position of the adjusted shutter column 302', i.e. its address/location within the shutter is recorded. This in turn may be used to determine a position of the aligned adjusted shutter pattern with respect to the NED device itself, which can be used to register the position of the user's eye with respect to the NED device and also determine a relative position of the eye relative to the NED device. A similar process can be performed with regards to the user's other eye to register the location of the same with respect to the NED device and determine the relative position of the other eye relative to the NED device. Such a process for the other eye may be performed after the process has been performed for the first eye or both eyes could be done simultaneously. By determining the relative positions of each of the user's eyes with respect to the NED device, a user's IPD may be determined.

It is to be appreciated that the adjusting/moving of the shutter pattern may be under the control of a controller 701 (not shown in Figs 2A-3C, but shown in Figure 7). Likewise, the NED 201 and its micro-display 201 a and optical engine 201 b may be controlled via a controller, such as controller 701.

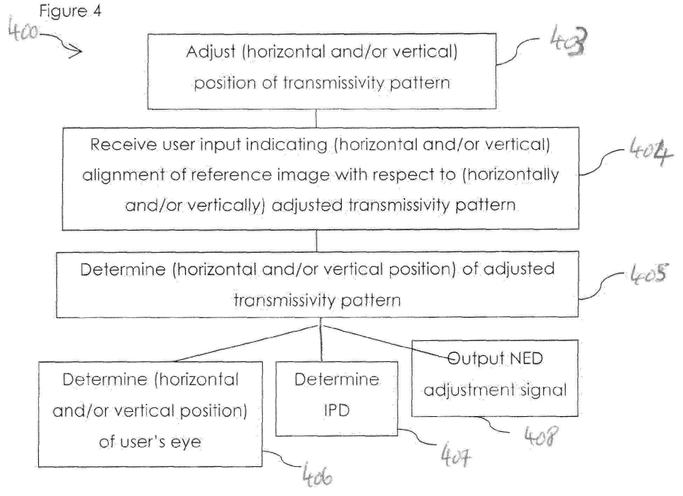

Figure 4 schematically illustrates a block diagram of a method 400. This method focuses on blocks similar to the blocks 103, 104 and 105 of Figure 1. In block 403, the horizontal and/or vertical position of the transmissivity pattern/shutter pattern 302 is adjusted. Such adjustment of the position of the transmissivity pattern is carried out until receipt of a user input confirming the horizontal and/or vertical alignment of the reference image with respect to the horizontally and/or vertically adjusted transmissivity pattern, as per block 404.

In block 405, a determination as to a horizontal and/or vertical position of the adjusted transmissivity pattern with respect to the NED device is carried out. Such determination of the adjusted transmissivity pattern may be used to:
determine the horizontal and/or vertical position of the user's eye with respect to the NED as per block 406, which themselves can be used to register the user's eye locations with the NED device and calibrate the NED device based on the same,
determine a user's IPD as per block 407, i.e. eye separation/distance between a user's eye, as per block 407
trigger an output signal as per block 408 such as a warning, alert or message for indicating to a user to adjust the position of the near eye display device. Such a signal may be a visual, audial or haptic signal for prompting the user to adjust the positioning of the NED on the user, e.g. adjusting a height of the NED on the user's face by adjusting a nose pad or similar so as to appropriately vertically (and rotate about an optical axis) align the NED with respect to the user's eyes.

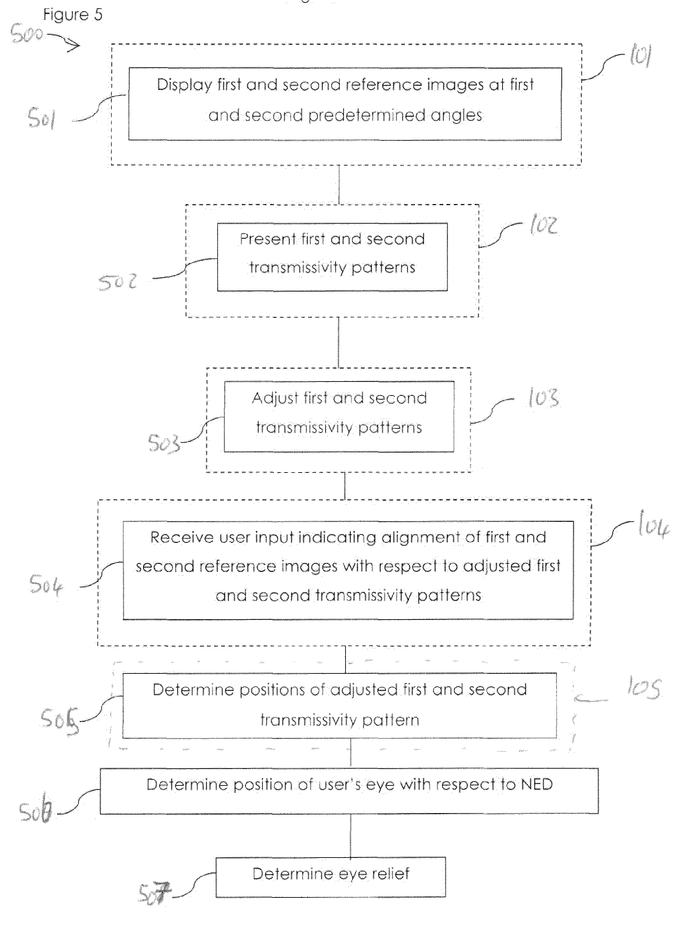

Figure 5 schematically illustrates a flow chart of a further method 500. The method steps 501-505 broadly correspond to the method steps 101-105, but wherein two shutter patterns 302a, 302b are presented and adjusted so as to be to be brought into alignment with two matching displayed target reference patterns 301 a, 301 b.

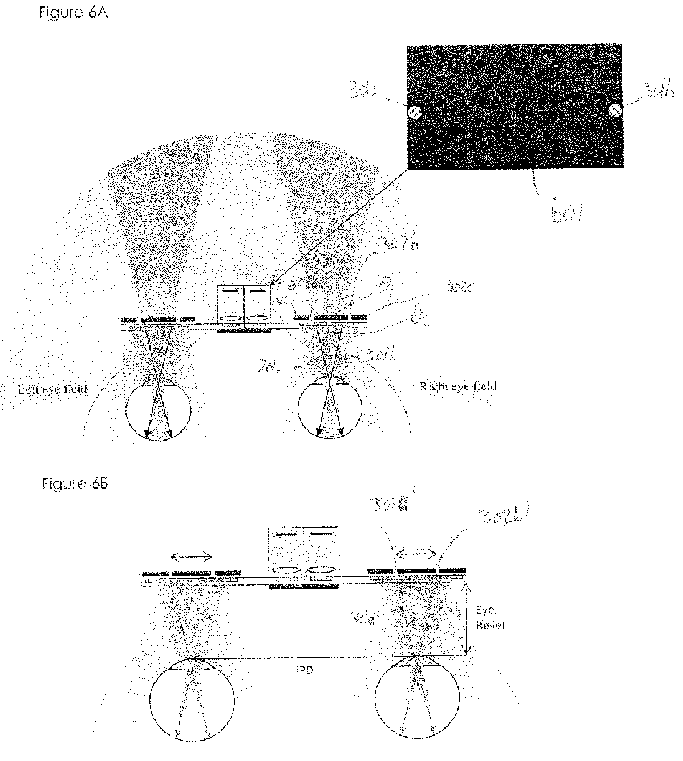

In particular (and with reference to Figures 6A and 6B), in block 501, first and second reference images 301 a and 301 b are displayed on the NED 201 (such as shown in insert 601 of figure 6A). The first reference image 301 a is a first virtual image that is displayed, focussed at infinity, at a first predetermined display angle θ₁ with respect to the display plane of the NED 201. Likewise, the second reference image 301 b, is a second virtual image displayed, focussed at infinity, at a second predetermined display angle θ₂ with respect to the display plane of the NED 201.

In block 502, first 302a and second 302b transmissivity patterns are presented on the shutter 202. In this particular example, the first and second target reference images 301a, 301b comprise first and second circles/dots and the first and second transmissivity patterns 302a, 302b comprise correspondingly shaped patterns in which the shutter is configured to be substantially black/opaque at all areas 302c except for two transparent regions 302a, 302b having a correspondingly shaped circle/dot which matches the shape of the first and second reference images 301 a, 301 b. Such a configuration is provided for each of a user's left eye and right eye. In block 503 (and as shown in Figure 6B) the first and second transmissivity patterns 302a, 302b are adjusted/shifted in position (either on a manual user controlled basis or a semi-automated process).

In block 504, in input is received, e.g. from a user, for indicating an alignment (such as shown in Figure 6B) of each of the first and second reference images 301 a, 302b with respect to the adjusted first and second transmissivity patterns 302a, 302b.

In block 505, responsive to receiving the input, a position of each of the adjusted first and second transmissivity patterns is determined.

In block 506, a determination is made as to a position of a (or both) user's eye(s) with respect to the NED 201/NED device 200. Such a determination may be used to determine user's eye relief (i.e. a separation distance between the user's eye and the NED device 200) as per block 507. A determination as to a separation distance between a user's eye with respect to a reference position of the NED 201 may be calculated, i.e. using trigonometric techniques, based on the determined positions of the adjusted first and second transmissivity patterns 302a, 302b as well as based on predetermined first and second display angles θ₁ and θ₂.

Figure 6B shows the adjustment of the location of the two transmissivity patterns 302a, 302b within the shutter so as to seek to align the transmissivity patterns 302a, 302b with the first and second reference images 301 a, 301 b. Such an alignment can be considered as adjusting each transmissivity pattern such that a virtual line coaxial with the display direction of the first reference target pattern 301 a passes through the adjusted position of the first transmissivity pattern 302a' (and likewise, a virtual line coaxial with the display direction of the second reference image 301 b passes through the second adjusted transmissivity pattern 302b').

Whilst in various examples discussed above, the shutter arrangement has been placed after/behind the NED/light guide, in certain other examples the shutters could be located in front of the NED/light guide. Likewise, in various examples described above, the transmissivity pattern has been described as the shutter being configured to be substantially opaque 302c except for a particular column or area 302 configured to be transparent, wherein the transparent column is shifted/moved around the shutter until brought into visual alignment with the reference image. However, in certain other examples, the arrangement could be inverted such that the shutter is configured to be substantially transparent with a particular column or area configured to be opaque/black/absorbing, and wherein the opaque region is shifted/moved around the shutter until brought into visual alignment with the reference image.

It is to be appreciated that the above described methods for determining a position of the user's eye may be carried out for each eye separately and could be done one eye at a time or both at the same time.

Examples of the apparatus have been described with respect to a binocular NED device 200. In other examples, a monocular NED device may be provided.

In various examples, the light source is out-coupled from the light guide of the NED device and is focused at infinity. The shutter arrangement of the NED device can be considered as a close focus display so that a light strip passing through the transparent shutter column at a very close focus. Examples of the present invention make use of both the alignment of the closed focus display (i.e the shutter) as well as the infinitely focused display, namely the near eye display means configured to display a target reference pattern substantially focussed at infinity. The position of the shutter column of the close focus display when aligned with such an infinitely focused target reference pattern may be used to determine various measurements, such as: relative eye positions (horizontal displacement, vertical displacement and depthwise separation distance with respect to a NED device), a user's IPD as well as eye relief. Such measurements may be useful to affect positional registration of the user's eyes with respect to the NED device.

Although examples of the apparatus have been described above in terms of comprising various components, it should be understood that the components may be embodied as or otherwise controlled by a corresponding controller or circuitry such as one or more processing elements or processors of the apparatus. In this regard, each of the components described above (not least the NED device 200, NED 201 and shutter 203) may be one or more of any device, means or circuitry embodied in hardware, software or a combination of hardware and software and that is configured to perform the corresponding functions of the respective components as described above.

The above described methods and flowcharts e.g. of Figures 1, 4 and 5 represents one possible scenario among others. The order of the blocks shown is not absolutely required, so in principle, the various blocks can be performed out of order. For example, the presentation of the transmissivity pattern may occur prior to the display of the reference image. Not all the blocks are essential.

In certain examples one or more blocks may be performed in a different order or overlapping in time, in series or in parallel. For example, the determination of eye position of one of the user's eyes may occur before, after or simultaneously with the determination of the user's other eye position. Likewise, the determination of a horizontal eye position of the user's eyes may occur before, after or simultaneously with the determination of the user's vertical eye position, i.e. by using a target reference image and transmissivity pattern with both horizontal and vertical components and adjusting the transmissivity pattern in horizontal and vertical directions until aligned with the displayed target reference image. One or more blocks may be omitted or added or changed in some combination of ways.

Examples of the present disclosure may take the form of a method, an apparatus or a computer program. Accordingly, examples may be implemented in hardware, software or a combination of hardware and software.

Examples of the present disclosure are described using flowchart illustrations and schematic block diagrams. It will be understood that each block (of the flowchart illustrations and block diagrams), and combinations of blocks, can be implemented by computer program instructions of a computer program. These program instructions may be provided to one or more processor(s), processing circuitry or controller(s) such that the instructions which execute on the same create means for causing implementing the functions specified in the block or blocks. The computer program instructions may be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

The component blocks of Figures 1, 4 and 5 are functional and the functions described may or may not be performed by a single physical entity (such the NED device 200 as described with reference to Figures 2A and 2B, and/or the controller 701 as described with reference to Figure 7).

Figure 7 schematically illustrates a block diagram of an apparatus 700 which may be used to control the various components of the NED device 200 to cause the performance of the method blocks and effect the above described functionality. For example, the apparatus 700 may control the micro-display 201 a, optical engine 201 b so as to cause the display of the reference image 301 so that the reference image is perceived as a virtual image focused at infinity. Likewise, the apparatus 700 may control the shutter 202 so as to present a particular transmissivity pattern 302 and also cause the adjusting/shifting of the position of the same. Likewise, the apparatus may be configured to receive a user input indicating alignment of the reference image 301 and the adjusted transmissivity pattern 302' and, response to the same, determine positions of the adjusted transmissivity pattern 302' and deriving/determining various eye positions and above described measurements. Furthermore, the controller may appropriately reconfigure the NED device so as to ensure that any subsequently displayed images are optimally configured based on the actual relative positions of the NED device and the user's eyes.

Fig 7 schematically illustrates an example of an apparatus 700 comprising a controller 701. The controller 701 is configured to, not least, control the display of the reference image, control the transmissivity pattern presented as well as adjust the same, receiving a user input indicating alignment of the reference image and the adjusted transmissivity pattern, e.g. via a user input device (not shown) and, responsive to the input, determine a position of the adjusted transmissivity pattern.

Implementation of the controller 701 can be in hardware alone (for example processing circuitry comprising one or more processors and memory circuitry comprising one or more memory elements), have certain aspects in software including firmware alone or can be a combination of hardware and software (including firmware). The controller may be implemented using instructions that enable hardware functionality, for example, by using executable computer program instructions in a general-purpose or special-purpose processor that may be stored on a computer readable storage medium (disk, memory etc.) or carried by a signal carrier to be performed by such a processor.

In the illustrated example, the apparatus 700 comprises a controller 701 which is provided by a processor 702 and memory 703. Although a single processor and a single memory are illustrated in other implementations there may be multiple processors and/or there may be multiple memories some or all of which may be integrated/removable and/or may provide permanent/semi-permanent/ dynamic/cached storage.

The memory 703 stores a computer program 704 comprising computer program instructions 705 that control the operation of the apparatus when loaded into the processor 702. The computer program instructions provide the logic and routines that enable the apparatus to perform the methods presently described.

The at least one memory 703 and the computer program instructions 705 are configured to, with the at least one processor 702, cause the apparatus 700 at least to perform the method described, for example with respect to figures 1, 4 and 5. The processor 702 is configured to read from and write to the memory 703. The processor 702 may also comprise an input interface 706 via which data and/or commands are input to the processor 702 (from one or more input devices 708, e.g. means for receiving a user input), and an output interface 707 via which data and/or commands are output by the processor 702 (to one or more output devices 709, e.g. the NED 201 or shutter 201).

The computer program may arrive at the apparatus 700 via any suitable delivery mechanism 711. The delivery mechanism 711 may be, for example, a non-transitory computer-readable storage medium, a computer program product, a memory device, a record medium or an article of manufacture that tangibly embodies the computer program 704. The delivery mechanism may be a signal configured to reliably transfer the computer program 704.

The apparatus 700 may receive, propagate or transmit the computer program 704 as a computer data signal.

The apparatus 700 may be comprised in/integral with the NED device 200 or may be in wired or wireless communication with the NED device.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analogue and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In one example, the apparatus 700 is embodied on the NED device, and/or on a hand held portable electronic device, such as a mobile telephone, wearable computing device, glasses or goggles that may additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

The apparatus 700 may be provided in a module. As used here 'module' refers to a unit or apparatus that excludes certain parts/components that would be added by an end manufacturer or a user (e.g. the NED 201 and shutter 203).

Examples of the present disclosure provide both a method and corresponding apparatus comprising various modules, means or circuitry that provide the functionality for performing the actions of the method. The modules, means or circuitry may be implemented as hardware, or may be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The blocks illustrated in Figs 1, 4 and 5 may represent actions in a method and/or sections of instructions/code in the computer program 704.

It will be understood that each block and combinations of blocks, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory storage device and performed by a processor.

As will be appreciated, any such computer program instructions may be loaded onto a computer or other programmable apparatus (i.e., hardware) to produce a machine, such that the instructions when performed on the programmable apparatus create means for implementing the functions specified in the blocks. These computer program instructions may also be stored in a computer-readable medium that can direct a programmable apparatus to function in a particular manner, such that the instructions stored in the computer-readable memory produce an article of manufacture including instruction means which implement the function specified in the blocks. The computer program instructions may also be loaded onto a programmable apparatus to cause a series of operational actions to be performed on the programmable apparatus to produce a computer-implemented process such that the instructions which are performed on the programmable apparatus provide actions for implementing the functions specified in the blocks.

Features described in the preceding description may be used in combinations other than the combinations explicitly described. Although functions have been described with reference to certain features, those functions may be performable by other features whether described or not.
Although features have been described with reference to certain examples, those features may also be present in other examples whether described or not. Although various examples of the present disclosure have been described in the preceding paragraphs, it should be appreciated that modifications to the examples given can be made without departing from the scope of the invention as set out in the claims.

Whilst examples have been discussed with regards to the preference image comprising a line such as a horizontal or vertical line and corresponding horizontal or vertical shutter pattern, alternative shapes of images and corresponding shapes of shutter patterns may be provided, not least: dots, bullseye targets, cross hairs with a correspondingly appropriately matched shutter pattern to enable a determination of an alignment of the target pattern and matching shutter pattern. Whilst displaying only vertical or horizontal line enables a more simplified display and shutter arrangement, more complex shaped images and shutter patterns may instead be used. Also, the shutter may be used for other purposes, for example dimming ambient light and also to present a externally viewable display.

Whilst examples have been discussed with regards to adjusting the shutter pattern, i.e. shifting the location of the shutter pattern/changing the location of which shutter elements are transparent or opaque, in other examples, the reference image could be adjusted, i.e. shifting the location of the reference pattern/changing the location of reference pattern on the NED (e.g. changing pixels form the reference pattern). In such examples, the user may provide an input when the user perceives the (adjusted) reference pattern and the (fixed) shutter pattern are aligned. The degree of adjustment of the reference pattern can be determined and used in the registration and configuration of the NED device with respect to the user's eyes.

In various examples the present invention seeks to enable registration of a user's eyes with respect to a NED device in all directions i.e., in each of X, Y and Z co-ordinates so as to provide vertical, horizontal and depth registration of the eye with respect to a NED device. Once the user's eyes' positions have been registered with respect to the NED device, the NED device can calibrate and reconfigured its display of virtual images so to optimally position the location of the display of the virtual images within the NED display, for example such that virtual displayed content is aligned with real world content visible via the device, e.g. wherein the NED device is a see-through NED device.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components).

As used herein, the "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some or all other examples. Thus 'example', 'for example' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise.

In the above description, the apparatus described may alternatively or in addition comprise an apparatus which in some other embodiments comprises a distributed system of apparatus, for example, a client/server apparatus system. In examples of embodiments where an apparatus provided forms (or a method is implemented as) a distributed system, each apparatus forming a component and/or part of the system provides (or implements) one or more features which collectively implement an example of the present disclosure. In some examples of embodiments, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims may be suitably combined in any manner apparent to one of ordinary skill in the art.

## Claims

1. A method comprising causing, at least in part, actions that result in:
displaying a reference image on means configured to provide a near eye display;
presenting a transmissivity pattern on means configured to provide selectively adjustable transparency;
adjusting the transmissivity pattern;
receiving an input for indicating an alignment of the displayed reference image and the adjusted transmissivity pattern; and
responsive to receiving the input, determining a position of the adjusted transmissivity pattern.

2. The method of claim 1, wherein the means configured to provide a near eye display comprises an optical arrangement configured to be able to output infinitely focused collimated light.

3. The method of any one or more of the previous claims, wherein displaying the reference image comprises displaying the reference image substantially focussed at infinity.

4. The method of any one or more of the previous claims, further comprising determining a position of an eye of the user using the determined position of the adjusted transmissivity pattern.

5. The method of any one or more of the previous claims, further comprising registering the position of the eye with respect to the near eye display means using the determined position.

6. The method of any one or more of the previous claims, further comprising determining an interpupillary distance of the user using the determined position of the adjusted transmissivity pattern.

7. The method of any one or more of the previous claims, further comprising triggering an output signal based on the determined position of the adjusted transmissivity pattern.

8. The method of any one or more of the previous claims, further comprising:
displaying a second reference image to the user;
wherein the displayed reference image is a first virtual image displayed at a first pre-determined display angle;
wherein the displayed second reference image is a second virtual image displayed at a second pre-determined display angle;
presenting a second transmissivity pattern to the user;
adjusting the second transmissivity pattern;
receiving an input from the user for indicating an alignment of the displayed second reference image and the adjusted second transmissivity pattern; and
responsive to receiving the user input, determining a position of the adjusted second transmissivity pattern

9. The method of claim 8, further comprising determining a separation distance between at least one eye of the user with respect to the near eye display means using the determined positions of the adjusted transmissivity pattern and the second adjusted transmissivity pattern.

10. An apparatus comprising means configured to cause the performance of the method as claimed in one or more of claims 1 to 9.

11. A device comprising the apparatus of claim 10, the device further comprising: means configured to provide a near eye display, and means configured to provide selectively adjustable transparency.

12. The device of claim 11, wherein the means configured to provide a near eye display comprises one or more of:
a see-through near eye display, a transparent light guide, an exit pupil expander, a microdisplay, a monocular near eye display, and a binocular near eye display.

13. The device of any one or more of claims 11 to 12, wherein the means configured to provide selectively adjustable transparency comprises one or more of:
a shutter arrangement, and a layer of a material whose transparency is selectively adjustable.

14. The device of any one or more of claims 11 to 13, wherein the device is at least one of:
a near eye display device, a head mountable device, a portable device, a handheld device, a wearable device, a wireless communications device, a user equipment device.

15. A computer program that, when performed by at least one processor, causes the method as claimed in any one or more of claims 1 to 9 to be performed.
